# EUROPÄISCHE PATENTSCHRIFT

(11) **EP 0 507 137 B1**
(45) Veröffentlichungstag und Bekanntmachung des Hinweises auf die Patenterteilung: **18.06.1997**
(21) Anmeldenummer: 92104440.0
(22) Anmeldetag: 14.03.1992
(51) Int. Cl.: B60K 17/30, F16H 48/10, B60K 17/16, B66F 9/075

(54) **Lenkbarer Radantrieb**
Steerable wheel drive
Train d'entraînement dirigeable

(30) Priorität: 04.04.1991 DE 4110792
(43) Veröffentlichungstag der Anmeldung: 07.10.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Berghoff, Gerhard, Dipl.-Ing., W-4600 Dortmund 50 (DE)

(56) Entgegenhaltungen:
- DE-A- 2 160 305
- FR-A- 1 326 436
- US-A- 2 944 617
- US-A- 3 534 825
- PATENT ABSTRACTS OF JAPAN, vol. 9, no. 220 (E-341)(1943) 6. September 1985; & JP-A-60 078 831 (TOSHIBA KK) 4. Mai 1985

## Beschreibung

Die Erfindung betrifft einen lenkbaren Radantrieb für Flurförderzeuge, insbesondere Hubstapler, Elektrokarren und dergleichen.

Solche Antriebseinheiten sind bekannt. Sie werden vielfältig in der Fahrzeugindustrie eingesetzt. Bei einigen Konstruktionen wird der Hohlraum der Radnabe für die Unterbringung des Antriebsmotors genützt. Der Lenkmotor befindet sich, falls eine solche Radeinheit gelenkt werden soll, stationär außerhalb des eigentlichen Radmotors. Zur Übertragung der Lenkbewegung wird häufig ein einfacher Riementrieb eingesetzt. Das Drehmoment des Antriebsmotors wird über eine mit der Radfelge drehfest verbundene Innenverzahnung übertragen. Bei dieser Lösung ist nachteilig, daß die Größe des Getriebes und des Motors nicht beliebig gewählt werden kann, da die Radbandage Grenzen setzt. Des weiteren schränken die mittig aus dem Radkörper herausragenden Triebswerkskomponenten, vor allem beim Einsatz zusätzlicher Sensoren, die Einbaumöglichkeiten ein. Der bei einer Radschwenkung entstehende Hüllradius über die Bauteile erfordert einen entsprechend freien Raum. Bei einer anderen Konstruktion eines Radnabenantriebes kann der Lenkmotor an den Radnabenkörper angeflanscht sein. Beim Lenkungsvorgang schwenkt auch dieser Antrieb mit. Dies erfordert zusätzliche bewegliche Kabelzuführungen für den Lenkmotor.

Aus der FR-A-1326436 ist ein lenkbarer Radantrieb mit einem Getriebegehäuse und einem diesem zugeordneten Fahrmotor und einem Lenkbetätigungselement bekannt. Ferner weist dieser Radantrieb einen Kegelradsatz und ihm zugeordnete Antriebsräder auf, zwischen denen mittig eine Lenkachse verläuft. Ein Differentialgebtriebe wird durch den Fahrmotor angetrieben, wobei die Lenkachse gleichzeitig die zentrale Drehachse des Radantriebes des Differentialgetriebes ist. Die Verwendung der Kegelräder führt dazu, daß Kräfte und Reaktionsmomente zwischen Fahr- und Lenkelementen entstehen, welche zu einer Differenzdrehzahl der Antriebsräder bei einer Kurvenfahrt des angetriebenen Fahrzeuges führen.

Gemäß einer anderen Lösung ist die Antriebseinheit axial auf dem Radnabenkörper angeordnet. Hierbei entfällt die bewegliche Kabelzuführung, da der Motor nicht mitgeschwenkt wird. Jedoch erfordert diese Konstruktion größere Bauhöhen. Auftretende Reaktionen aus dem Rad, Getriebe und Motormomenten werden durch die außermittige Lage der Radbandage nicht vollständig eliminiert. Gegenseitige Beeinflussungen von Fahrantriebsmotor und Schwenkmotor treten bei dieser Lösung verstärkt auf.

Daneben sind Konstruktionen bekannt, die zentrale Achsträger und an deren jeweiligen Enden mittels Radflansch befestigte Räder aufweisen. Die Lenkung wird hierbei üblicherweise mittels Achsschenkelkonstruktionen realisiert und die Lenkbewegung beider Räder über Spurstangen gekoppelt. Ein zwischen den Achsen angeordneten Differentialgetriebe verteilt Drehmoment und Drehzahl des Antriebes auf beide Radflansche. Nachteilig wirken sich bei dieser Konstruktion der erforderliche Bauaufwand für den Achsträger, der eingeschränkte, maximal mögliche Lenkeinschlagwinkel und der Lenkfehler durch die Spurstangenkopplung beider Radflansche aus.

Ausgehend von dem aus der FR-A-1326436 bekannten Radantrieb, besteht die Aufgabe der Erfindung darin, den die Merkmale des Oberbegriffs des Hauptanspruches aufweisenden Radantrieb so weiterzubilden, daß beim gleichzeitigen Auftreten der Funktionen Lenken und Fahren die Fahr- und Lenkantriebseinheiten durch gegenseitige Reaktionskräfte des Radgetriebes nicht beeinflußt werden.

Diese Aufgabe ist durch die im Hauptanspruch angegebene Erfindung gelöst. Die Unteransprüche stellen weitere vorteilhafte Ausbildungen dar.

Die Ausbildung des lenkbaren Radantriebs sieht vor, daß das Differentialgetriebe ein durch den Fahrmotor in seiner zentralen Drehachse an mindestens einem Zahnrad in mindestens einem seiner Getriebestufen angetriebenes Planetendifferentialgetriebe ist und das Reaktionsmoment dabei um die zentrale Drehachse des Planetendifferentialgetriebes über mindestens ein weiteres Zahnrad einer Stufe des Planetendifferentialgetriebes in das Fahrgestell abgeleitet wird. Ferner ist vorgesehen, daß das Getriebegehäuse um die zentrale Drehachse durch einen Lenkmotor angetrieben wird und daß der Kegelradsatz aus mindestens einer Kegelradstufe pro Abtriebsseite besteht und über seine Kegelritzel durch das Planetendifferentialgetriebe angetrieben wird. Durch diese Ausgestaltung ist erreicht, daß keine Reaktionsmomente auf den Lenkantrieb entstehen und durch die Differentialwirkung des Planetendifferentialgetriebes gleichzeitig die Beeinflussung des Fahrantriebes durch die Lenkbewegung der Radeinheit und durch die Kurvenfahrt des Fahrzeuges verhindert wird. Beide sind voneinander entkoppelt. Durch die geeignete Wahl der Übersetzungen im Planetendifferentialgetriebe und des Kegelradsatzes entstehen keine gegenseitigen Reaktionskräfte und Reaktionsmomente zwischen Fahr- und Lenkmotoren, die durch eine Kurvenfahrt des Fahrzeuges bedingte Differenzdrehzahl der Antriebsräder wird im Planetendifferentialgetriebe ausgeglichen. Dadurch, daß der Lenk- und Fahrmotor fest mit dem Fahrgestell verbunden sind, ist gewährleistet, daß die Fahr- und Lenkantriebe außerhalb der Schwenkkontur des Antriebes liegen. Weiterhin ist erfindungsgemäß besonders vorteilhaft, daß der den Antriebsrädern zugeordnete Kegelradsatz eine Umlenkung der Antriebsdrehachse aus der horizontalen Radachse in eine vertikale Getriebedrehachse, bezogen auf die Radaufstandsfläche, darstellt. Dabei bilden die vertikalen Getrieberadachsen der Kegelradsätze beider Antriebsräder und die Lenkachse des Radantriebes eine gemeinsame Achse, welche mittig zwischen den Antriebsrädern angeordnet ist.

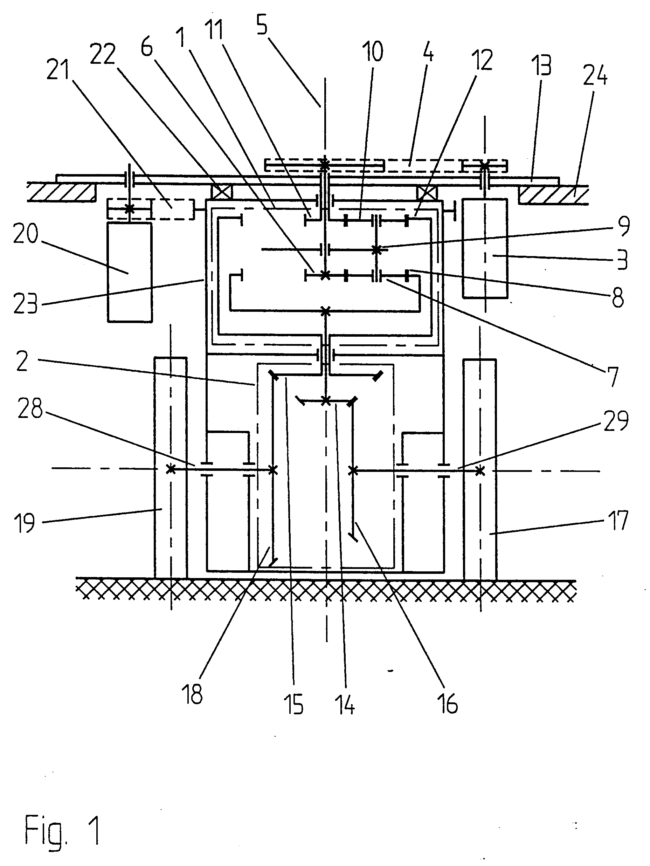

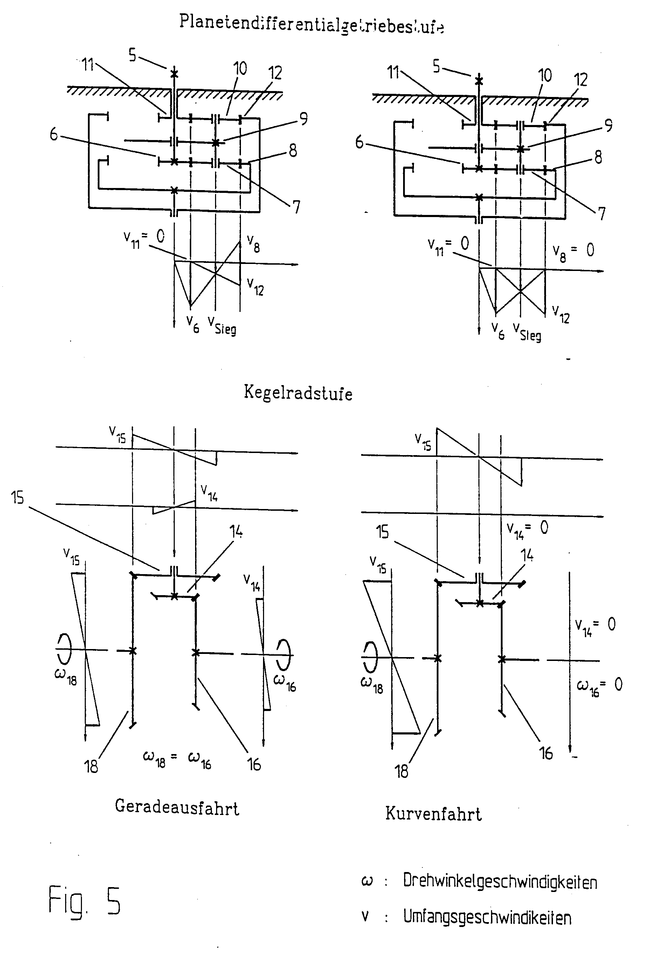

Die Erfindung wird in den nachfolgenden Figuren 1 bis 5 anhand eines Ausführungsbeispieles näher erläutert. Es zeigen:
- Fig. 1:: eine schematische Darstellung des lenkbaren Radantriebes;
- Fig. 2:: eine schematische Darstellung des lenkbaren Radantriebes mit Kräfte- und Momentenanordnung;
- Fig. 3:: eine Prinzipdarstellung der Pendelaufhängung des Radantriebes;
- Fig. 4:: eine Seitenansicht des Radantriebes mit Pendelaufhängung;
- Fig. 5:: eine Prinzipdarstellung des Geschwindigkeitsplanes für die Planetendifferentialgetriebestufe und für die Kegelradstufe bei einer Geradeausfahrt und einer Kurvenfahrt.

Der lenkbare Radantrieb weist ein Planetendifferentialgetriebe 1, einen Kegelradsatz 2, einen Fahrmotor 3, eine zentrale Drehachse 5, einen Lenkmotor 20 und zwei Antriebsräder 17, 19 auf. Die zentrale Drehachse 5 ist gleichzeitig die Lenkachse des Radantriebes. Sie verläuft mittig zwischen den beiden Antriebsrädern 17, 19. Der Kegelradsatz 2 besteht aus zwei Kegelritzel 14, 15 und zwei Kegelrädern 18, 16. Die beiden, vertikal angeordneten Antriebswellen der Kegelritzel 14, 15 sind fest mit einem zugeordneten jeweiligen Umfangsrad 8, 12 des Planetendifferentialgetriebes 1, deren Drehachse ebenfalls in der Lenkachse 5 des Radantriebes liegt, fest verbunden. Das Planetendifferentialgetriebe 1 besteht aus zwei übereinander liegenden Planetengetriebestufen, deren mit Kegelradwellen verbundenen Umfangsräder 8, 12, bezogen auf ihre gemeinsame Drehachse 5 keine starre Kopplung miteinander besitzen, sondern über die jeweiligen Planetenräder 7, 10 angetrieben werden. Die Planetenräder 7, 10 sind auf Bolzen oder Wellen frei drehbar gelagert. Die Bolzen bzw. Wellen sind einer gemeinsamen Drehkonstruktion 9 zugeordnet derart, daß die Planetenräder 7, 10 drehfest zueinander, bezogen auf die zentrale Drehachse 5 gekoppelt sind, wobei die Planetenräder 7 einer Getriebestufe durch das zugeordnete Sonnenrad 6 angetrieben werden und das Sonnenrad 11 der zweiten Stufe starr und drehfest, bezogen auf die Drehbewegungen des Planeten- und Kegelradgetriebes 1, 2 und der Lenkung angeordnet ist. Der Fahrantriebsmotor 3 mit einer vertikalen Anordnung der Antriebsachse, bezogen auf die Radaufstandsfläche der Antriebsräder 17, 19 ist direkt in der Lenkachse 5 des Radantriebes und damit direkt in der zentralen Drehachse 5 des Planetendifferentialgetriebes 1 oberhalb desselben angeordnet und direkt am Fahrgestell 24 oder an einer, dem Radgetriebegehäuse 23 zugeordneten Kopfplatte 13 befestigt. Die Kopfplatte 13 ist dem Radgetriebegehäuse 23 fest zugeordnet. Ist der Fahrmotor 3 außerhalb der Lenkachse 5 des Radantriebes angeordnet, so kann eine zusätzliche Getriebestufe mit Zahnrädern, Zahnriemen oder dergleichen vorgesehen sein, welche die Übertragung von Drehmomenten und Drehzahlen des Fahrmotors auf das Radgetriebe bzw. das Planetendifferentialgetriebe (1) vornimmt. Der Lenkantriebsmotor 20 kann außerhalb des Radgetriebegehäuses 23 direkt am Fahrgestell 24 oder an einer zusätzlichen, dem Fahrgestell drehfest zugeordneten Kopfplatte 13, 30 befestigt sein und über eine Getriebestufe mittels Zahnrädern, Keilriemen oder dergleichen das Radgetriebegehäuse 23 oder den Getriebeträger 26 in seinem Drehkranzlager 22 und damit auch das Radgetriebe mit den Antriebsrädern um die Lenkachse 5 schwenken. Das Drehkranzlager 22 ist in der Kopfplatte 13 angeordnet, an der ebenfalls die Fahr- und Lenkmotoren 3, 20 die zugehörigen Riementriebe 4, 21 und das Sonnenrad 11 befestigt sind. Diese Anordnung ermöglicht eine Anpassung der Motorendrehzahl an die gewünschten Rad-Lenknenndrehzahlen durch den einfachen Austausch der Riemenräder der Riementriebe 4, 21 zu Gunsten einer anderen Übersetzung. Durch die stationäre Zuordnung der Fahr- und Lenkantriebe 3, 20, bezogen auf die Getriebebewegungen beim Fahren und Lenken, sind alle Anordnungen oberhalb oder seitlich im Raum, möglich. Ein Anbau der Motoren direkt in der Lenkachse 5 oder ihr horizontaler Einbau, mit z.B. zusätzlichen Kegel- oder Schneckengetrieben, sind ebenfalls möglich.

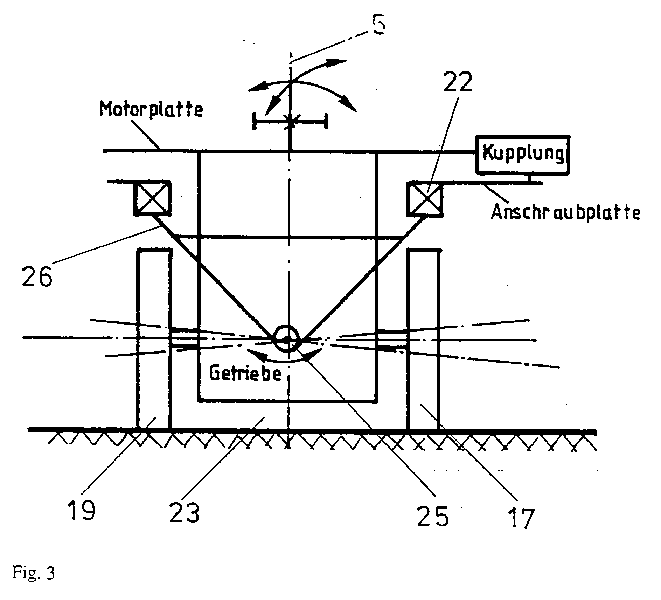

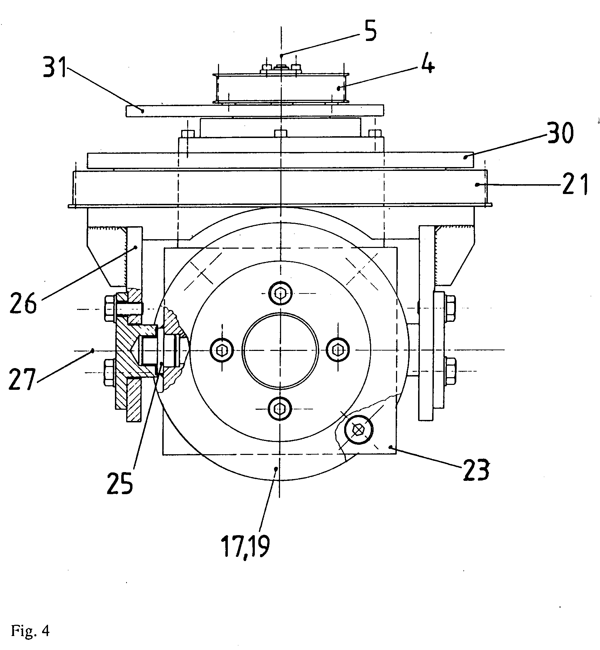

Zum Ausgleich von Bodenunebenheiten kann, wie aus Fig.3, 4 ersichtlich, das Radgetriebe mit den Antriebsrädern 17, 19 an seinem Gehäuse 23 pendelnd, z.B. über Bolzen 25, in einem Getriebeträger 26 aufgehängt werden. Die Pendelachse 27 weist dabei horizontal in die Fahrtrichtung der Räder 17, 19, also vertikal zu deren Antriebswellen 28, 29. Der Getriebeträger 26 ist über das Drehkranzlager 22 und eine Kopfplatte 30 mit dem Fahrgestell 24 verbunden. Der an der Kopfplatte 30 befestigte Lenkmotor 20 treibt über seine Getriebeanordnung den Getriebeträger 26 an. Das Radgetriebe besitzt am oberen Ende seines Gehäuses 23, d.h. am Eingang des Planetendifferentialgetriebes 1 eine weitere Kopfplatte 31, an der das Sonnenrad 11 und der Fahrmotor 3 mit seiner Getriebeanordnung 4 befestigt sind. Bei einem nichtgelenkten Radgetriebe mit der Pendelausführung wird der Getriebeträger 26 direkt mit seiner Kopfplatte 30 am Fahrgestell 24 befestigt. Die Kopfplatte 31 ist drehfest, bezogen auf die Lenkachse 5, an der Kopfplatte 30 oder am Fahrgestell 24 befestigt. Gleichzeitig muß sie die zulässige Pendelbewegung des Radgetriebgehäuses 23 und seiner Räder 17, 19 nachvollziehen können. Im Ausführungsbeispiel gemäß Fig. 3, 4 ist dies durch eine Paralellschiebeführung 32 erreicht.

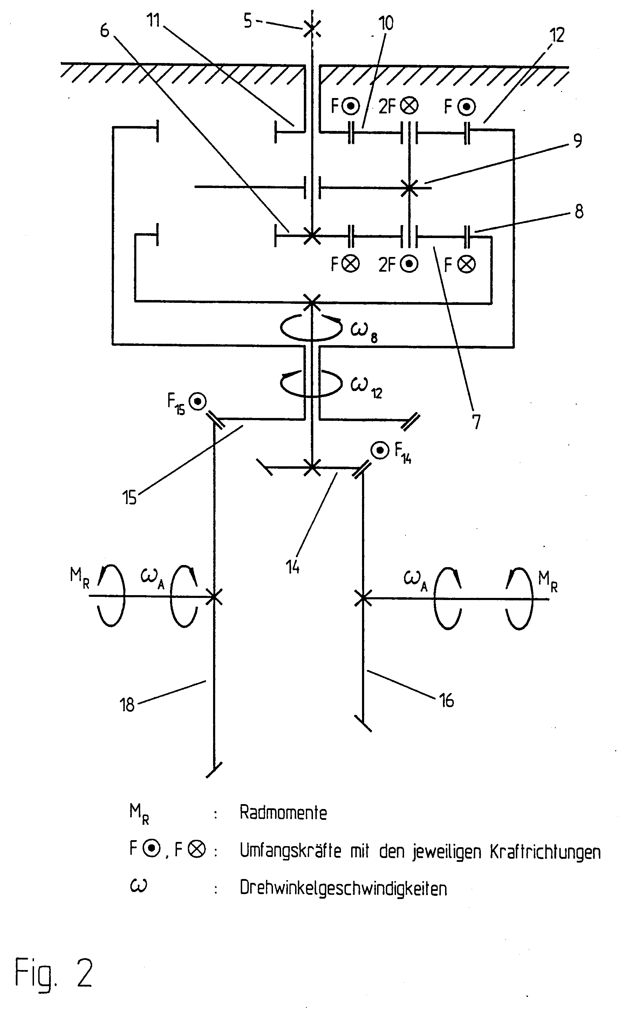

Es ergibt sich folgende Wirkungsweise:
Der Fahrmotor 3 treibt über ein Getriebe 4 ein in der Lenkachse 5 angeordnetes Sonnenrad 6 des Planetendifferentialgetriebes 1 an. Über den zugehörigen Planetenradsatz 7 werden Drehbewegungen und Drehmomente auf das Umfangsrad 8 übertragen. Durch die Rotationsbewegung des Planetenradsatzes 7 um die Sonnenradachse 5 erfolgt durch die starre Kopplung 9 mit dem Planetenradsatz 10 gleichzeitig eine Übertragung der Reaktionskräfte in die zweite Stufe des Planetendifferentialgetriebes 1. Die Abwälzbewegung des Planetenradsatzes 10 auf dem drehfest, bezogen auf das Sonnenrad 6 und die Lenkachse 5 angeordneten Sonnenrad 11, führt zum Antrieb des Umlaufrades 12. Das Sonnenrad 11 ist in der gezeigten Ausführungsform fest verbunden mit der Kopfplatte 13. Die Kopfplatte 13 ist gemäß der dargestellten Ausführungsform fest mit dem Fahrgestell 24 verbunden. Hierdurch ist gewährleistet, daß, basierend auf den Kräfte- und Momenteplan der Anordnung nach Fig. 2, kein Getriebereaktionsmoment über das Getriebehäuse 23 auf die Lenkung wirkt. Beide Umlaufräder 8, 12 sind starr gekoppelt an die jeweilig zugeordneten Kegelritzel 14, 15. Beide liegen in der Antriebsachse 5 der Sonnenräder 6, 11. Kegelritzel 14 überträgt sein Drehmoment und seine Drehzahl über das Kegelrad 16 an das Rad 17. Kegelritzel 15 treibt über Kegelrad 18 das Rad 19 an. Gemäß dem Ausführungsbeispiel weisen die beiden Planetenstufen des Planetendifferentialgetriebes 1 Zahnräder mit jeweils gleichen Teilkreisen ihrer Sonnen-, Planeten- und Umlaufräder. Hierdurch sind zur Erzeugung einer gleichmäßigen Differentialwirkung an beiden Rädern 17, 19 mit gleichem Abtriebsdrehmoment und einer Anpassung der Abtriebsdrehzahl an unterschiedliche Lenkgeometrien des Fahrgestelles gleiche Übersetzungen an beiden Kegelradsätzen 2 erforderlich. Der Lenkmotor 20 treibt über einen Riementrieb 21 das in dem Drehkranzlager 22 gelagerte Getriebegehäuse 23 an.

## Patentansprüche

1. Lenkbarer Radantrieb für Flurförderzeuge mit einem Getriebegehäuse (23) und einem diesem zugeordneten Fahrmotor (3) und einem Lenkbetätigungselement, mit einem Kegelradsatz und diesem zugeordneten Antriebsrädern, zwischen denen mittig eine Lenkachse (5) verläuft und einem durch den Fahrmotor (3) angetriebenen Differentialgetriebe, wobei die Lenkachse (5) gleichzeitig die zentrale Drehachse des Radantriebes des Differentialgetriebes ist, **dadurch gekennzeichnet**, daß das Differentialgetriebe ein Planetendifferentialgetriebe (1) ist und durch den Fahrmotor (3) in seiner zentralen Drehachse (5) an mindestens einem Zahnrad (6) in mindestens einer seiner Getriebestufen angetrieben wird, wobei das Reaktionsmoment um die zentrale Drehachse (5) des Planetendifferentialgetriebes (1) über mindestens ein weiteres Zahnrad (11) einer Stufe des Planetendifferentialgetriebes (1) in das Fahrgestell abgeleitet wird und daß das Lenkbetätigungselement ein das Getriebegehäuse (23) um die zentrale Drehachse antreibender Lenkmotor (20) ist und daß der Kegelradsatz (2) aus mindestens einer Kegelradstufe pro Abtriebsseite besteht und über seine Kegelritzel (14, 15) durch das Planetendifferentialgetriebe (1) angetrieben wird.

2. Lenkbarer Radantrieb nach Anspruch 1, **dadurch gekennzeichnet**, daß das Planetendifferentialgetriebe (1) aus zwei übereinander liegenden Planetengetriebestufen (6, 7, 11, 10) besteht, deren Umfangräder (8, 12) über die jeweiligen Planetenräder (7, 10) antreibbar sind, wobei diese in bezug auf die zentrale Drehachse (5) drehfest zueinander gekoppelt sind.

3. Lenkbarer Radantrieb nach Anspruch 2, **dadurch gekennzeichnet**, daß die Planetenräder (7) der ersten Planetengetriebestufe durch ein Sonnenrad (6) antreibbar sind.

4. Lenkbarer Radantrieb nach Anspruch 2, **dadurch gekennzeichnet**, daß ein Sonnenrad (11) der zweiten Getriebestufe starr und drehfest in bezug auf die Drehbewegung des Planetendifferentialgetriebes (1), des Kegelradsatzes (2) und der Lenkung angeordnet ist.

5. Lenkbarer Radantrieb nach einem oder mehreren der vorangegangenen Ansprüche, **dadurch gekennzeichnet**, daß die beiden vertikalen Abtriebswellen der Kegelritzel (14, 15) fest mit einem zugeordneten jeweiligen Umfangsrad (8, 12) des Planetendifferentialgetriebes (1) verbunden sind.

6. Lenkbarer Radantrieb nach einem oder mehreren der vorangegangenen Ansprüche, **dadurch gekennzeichnet**, daß die Antriebsachse des Fahrmotors (3) in der Lenkachse (5) des Radantriebes angeordnet ist.

7. Lenkbarer Radantrieb nach einem oder mehreren der vorangegangenen Ansprüche 1 bis 5, **dadurch gekennzeichnet**, daß die vertikale Antriebsachse des Fahrmotors (3) außerhalb der Lenkachse (5) des Radantriebes angeordnet ist und eine Übertragung des Antriebes mittels zusätzlicher Getriebestufen (4) auf die zentrale Dreh- und Antriebsachse (5) des Planetendifferentialgetriebes (1) erfolgt.

8. Lenkbarer Radantrieb nach einem der vorangegangen Ansprüche, **dadurch gekennzeichnet**, daß das Getriebehäuse (23) mit den Antriebsrädern (17, 19) über Bolzen bzw. Wellen (25) in einem Getriebeträger 26) pendelnd aufgehängt ist, und die Pendelachse horizontal in die Fahrtrichtung der Räder (17, 19) verläuft.

9. Lenkbarer Radantrieb nach Anspruch 8, **dadurch gekennzeichnet**, daß der Getriebeträger (26) mit einem Drehkranzlager (22) direkt oder über eine Kopfplatte (30) am Fahrgestellt (24) befestigt ist.

## Claims

1. A steerable wheel drive for industrial trucks with a gearbox (23) and an associated traction motor (3) and a steering actuating element, with a bevel gear and associated drive wheels, between which a steering axis (5) extends centrally and with a differential gear driven by the traction motor (3), the steering axis (5) at the same time being the central rotational axis of the differential gear wheel drive, characterised in that the differential gear is a planetary differential gear (1) and is driven by the traction motor (3) along its central rotational axis (5) at at least one gearwheel (6) in at least one of its gear stages, the reaction torque about the central rotational axis (5) of the planetary differential gear (1) being diverted to the chassis through at least one other gearwheel (11) of a stage of the planetary differential gear (1) and in that the steering actuating element is a steering motor (20) which drives the gearbox (23) about the central rotational axis and in that the bevel gear (2) consists of at least one bevel gearwheel stage per output side and is driven via its bevel pinions (14, 15) by the planetary differential gear (1).

2. A steerable wheel drive according to claim 1, characterised in that the planetary differential gear (1) consists of two superposed planetary gear stages (6, 7, 11, 10), the peripheral gearwheels (8, 12) of which are drivable via the respective planetary gearwheels (7, 10), the latter being coupled to one another so as to be non-rotatable with respect to the central rotational axis (5).

3. A steerable wheel drive according to claim 2, characterised in that the planetary gearwheels (7) of the first planetary gear stage are drivable by a sunwheel (6).

4. A steerable wheel drive according to claim 2, characterised in that a sunwheel (11) of the second gear stage is disposed rigidly and non-rotatably with respect to the rotary movement of the planetary differential gear (1), the bevel gear (2) and the steering.

5. A steerable wheel drive according to one or more of the preceding claims, characterised in that the two vertical output shafts of the bevel pinions (14, 15) are rigidly connected to an associated respective peripheral gearwheel (8, 12) of the planetary differential gear (1).

6. A steerable wheel drive according to one or more of the preceding claims, characterised in that the drive axis of the traction motor (3) is disposed on the wheel drive steering axis (5).

7. A steerable wheel drive according to one or more of the preceding claims 1 to 5, characterised in that the vertical drive axis of the traction motor (3) is disposed outside the wheel drive steering axis (5) and the drive is transmitted by additional gear stages (4) to the central rotational and drive axis (5) of the planetary differential gear (1).

8. A steerable wheel drive according to any one of the preceding claims, characterised in that the gearbox (23) is suspended with the drive wheels (17, 19) by means of bolts or shafts (25) in a gearbox carrier (26) so as to swing and the swing axis extends horizontally into the direction of travel of the wheels (17, 19).

9. A steerable wheel drive according to claim 8, characterised in that the gearbox carrier (26) is fixed by a rotary bearing (22) on the chassis (24) directly or via a head plate (30).

## Revendications

1. Train d'entraînement dirigeable pour des chariots de manutention avec une boîte de vitesse (23) et un moteur de traction (3) associé à celle-ci, avec un jeu de roues coniques et des roues d'entraînement associées à celui-ci, entre lesquelles se développe au centre un axe orientable (5) et un différentiel commandé par le moteur de traction (3), l'axe orientable (5) étant en même temps l'axe de rotation de la commande de roues du différentiel,
caractérisé en ce que
le différentiel est un différentiel planétaire (1) et il est entraîné par le moteur de traction (3) agissant sur son axe de rotation (5) central sur au moins une roue dentée d'au moins un de ses étages de transmission, tandis que le couple réactionnel est dérivé dans le châssis autour de l'axe de rotation central (5) du différentiel (1) par au moins une autre roue dentée (11) d'un étage du différentiel (1) et en ce que l'élément d'actionnement de direction est un moteur de commande (20) commandant le carter de transmission (23) autour de l'axe de rotation central et en ce que le jeu de roues coniques (2) se compose d'au moins un étage de roues coniques par l'arbre de sortie et est entraîné par le différentiel planétaire (1) par l'intermédiaire de ses pignons coniques (14, 15).

2. Train d'entraînement dirigeable selon la revendication 1,
caractérisé en ce que
le différentiel planétaire (1) se compose de deux étages d'engrenage planétaire superposés (6, 7, 11, 10), dont les roues périphériques (8, 12) peuvent être entraînées par les roues planétaires respectives (7, 10), tandis que celles-ci sont accouplées l'une par rapport à l'autre solidaires en rotation par rapport à l'axe de rotation central (5).

3. Train d'entraînement dirigeable selon la revendication 2,
caractérisé en ce que
les roues planétaires (7) du premier étage d'engrenage planétaire peuvent être commandées par une roue solaire (6).

4. Train d'entraînement dirigeable selon la revendication 2,
caractérisé en ce que
une roue solaire (11) du deuxième étage d'engrenage est disposée fixe et solidaire en rotation par rapport au mouvement de rotation du différentiel planétaire (1), du jeu de roues coniques (2) et de la direction.

5. Train d'entraînement dirigeable selon une ou plusieurs des revendications précédentes,
caractérisé en ce que
les deux arbres d'entraînement verticaux des pignons coniques (14, 15) sont reliés solidairement à une roue périphérique respective associée (8, 12) du différentiel planétaire (1).

6. Train d'entraînement dirigeable selon une ou plusieurs des revendications précédentes,
caractérisé en ce que
l'axe de commande du moteur de traction (3) est disposé dans l'axe dirigeable (5) de l'entraînement de roues.

7. Train d'entraînement dirigeable selon une ou plusieurs des revendications précédentes 1 à 5,
caractérisé en ce que
l'axe d'entraînement vertical du moteur de traction 3 est placé en dehors de l'axe dirigeable (5) de l'entraînement des roues et une transmission d'entraînement a lieu au moyen d'étapes de transmission supplémentaires (4) sur l'axe central de rotation et d'entraînement (5) du différentiel planétaire (1).

8. Train d'entraînement dirigeable selon une ou plusieurs des revendications précédentes,
caractérisé en ce que
le carter de transmission (23) est accroché aux roues d'entraînement (17, 19) de manière oscillante par des axes ou arbres (25) dans un support de transmission (26) et l'axe pendulaire se développe horizontalement dans le sens de marche des roues (17, 19).

9. Train d'entraînement dirigeable selon la revendication 8,
caractérisé en ce que
le support de transmission (26) est fixé à un palier de couronne d'orientation (22) directement ou par une semelle de recouvrement (30) au châssis (24).
